# EUROPEAN PATENT APPLICATION

(11) **EP 4 464 625 A1**
(43) Date of publication of application: **20.11.2024**
(21) Application number: 22919870.0
(22) Date of filing: 11.10.2022
(51) Int. Cl.: B65G 1/04, B65G 1/137

(54) **SHUTTLE CONTROL METHOD AND APPARATUS, SHUTTLE, AND STORAGE MEDIUM**

(30) Priority: 12.01.2022 CN 202210032382
(71) Applicant: Beijing Jingdong Qianshi Technology Co., Ltd., Beijing 100176 (CN)
(72) Inventor: LIU, Xu, Beijing 100176 (CN); ZHE, Wenming, Beijing 100176 (CN); ZHANG, Tao, Beijing 100176 (CN); HUANG, Min, Beijing 100176 (CN); SHANG, Chunpeng, Beijing 100176 (CN)
(74) Representative: Page White Farrer
(86) International application number: PCT/CN2022/124649
(87) International publication number: WO 2023/134236

(57) **Abstract**

The present disclosure provides a shuttle control method and apparatus, a shuttle, and a storage medium. The method comprises: controlling a first distance measuring apparatus and a second distance measuring apparatus to measure a respective first distance and second distance from a carrying target, and on the basis of results of separately performing first comparison processing on the first distance and the second distance with a target normal distance threshold, determining whether goods handling can be performed; and when it is determined that goods handling cannot be performed, separately performing second comparison processing on the first distance and the second distance with a deviation-correcting distance threshold, and on the basis of the results of the second comparison processing, determining whether to control the shuttle to perform deviation correction processing.

## Description

### CROSS-REFERENCE TO RELATED APPLICATIONS

The present disclosure is based on and claims the priority to the Chinese Patent Application No. CN202110032382.0 filed on January 12, 2022, the disclosure of which is incorporated by reference herein in its entirety.

### TECHNICAL FIELD

The present disclosure relates to the technical field of logistics, and in particular, to a shuttle vehicle control method and apparatus, a shuttle vehicle, and a storage medium.

### BACKGROUND

In a modern automated logistics warehouse, an item is typically picked and placed on a shelf using a reciprocating rail shuttle vehicle. The shuttle vehicle includes a fixed-distance shuttle vehicle, a variable-distance shuttle vehicle and the like, wherein the fixed-distance shuttle vehicle refers to a shuttle vehicle with a picking-and-placing mechanism of a fixed-width, and the variable-distance shuttle vehicle refers to a shuttle vehicle with a picking-and-placing mechanism adjustable within a certain range. The item picked and placed by the shuttle vehicle can be a bin (into which a commodity is placed) and the like, and can also be a commodity with a complete package. The shuttle vehicle is controlled to place the bin in a storage location of the shelf, and a position of the storage location is recorded in the system; when it is needed to pick the item, the shuttle vehicle is controlled to move to the corresponding storage location to pick the bin from the storage location of the shelf.

### SUMMARY

According to a first aspect of the present disclosure, there is provided a shuttle vehicle control method, comprising: controlling a shuttle vehicle to reach a specified position, and controlling a first distance measurement device and a second distance measurement device to respectively measure a first distance and a second distance from a carrying target, wherein the first distance measurement device and the second distance measurement device are respectively mounted on a first fork mechanism and a second fork mechanism which are arranged in parallel on the shuttle vehicle; respectively performing first comparison processing on the first distance and the second distance with a target normal distance threshold, and determining whether it is able to control the first fork mechanism and the second fork mechanism to perform goods processing based on a first comparison processing result; and in a state of determining that it is unable to control the first fork mechanism and the second fork mechanism to perform goods processing, respectively performing second comparison processing on the first distance and the second distance with a deviation correction distance threshold, and determining whether the shuttle vehicle is controlled to perform deviation correction processing based on a second comparison processing result.

In some embodiments, the determining whether it is able to control the first fork mechanism and the second fork mechanism to perform goods processing based on a first comparison processing result comprises: if the first distance is greater than the target normal distance threshold and the second distance is greater than the target normal distance threshold, determining that it is able to control the first fork mechanism and the second fork mechanism to perform goods processing.

In some embodiments, the controlling the first fork mechanism and the second fork mechanism to perform goods processing comprises: controlling the first fork mechanism and the second fork mechanism to be respectively extended out by a first forking length, wherein the first forking length is equal to the target normal distance threshold.

In some embodiments, the determining whether the shuttle vehicle is controlled to perform deviation correction processing based on a second comparison processing result comprises: if the first distance is less than the deviation correction distance threshold or the second distance is less than the deviation correction distance threshold, determining that the shuttle vehicle cannot be controlled to perform deviation correction processing.

In some embodiments, in the state of determining that the shuttle vehicle cannot be controlled to perform deviation correction processing, abnormality information of placement of the carrying target is reported.

In some embodiments, the controlling the shuttle vehicle to perform deviation correction processing comprises: controlling the first fork mechanism and the second fork mechanism to be respectively extended out by a second forking length based on the first distance and the second distance, and controlling the shuttle vehicle to move forwards and backwards.

In some embodiments, the controlling the first fork mechanism and the second fork mechanism to be respectively extended out by a second forking length based on the first distance and the second distance comprises: selecting a shorter distance from the first distance and the second distance; and taking a difference between the shorter distance and a measurement error threshold as the second forking length.

In some embodiments, the controlling the shuttle vehicle to move forwards and backwards comprises: controlling the shuttle vehicle to move forwards and backwards at least once based on a forward movement distance setting value and a backward movement distance setting value until the first distance is greater than the target normal distance threshold and the second distance is greater than the target normal distance threshold.

In some embodiments, the carrying target comprises: a cargo box; and the first distance measurement device and the second distance measurement device comprise: a laser distance measurement device.

According to a second aspect of the present disclosure, there is provided a shuttle vehicle control apparatus, comprising: a distance detection module configured to control a shuttle vehicle to reach a specified position, and control a first distance measurement device and a second distance measurement device to respectively measure a first distance and a second distance from a carrying target, wherein the first distance measurement device and the second distance measurement device are respectively mounted on a first fork mechanism and a second fork mechanism which are arranged in parallel on the shuttle vehicle; a goods processing module configured to respectively perform first comparison processing on the first distance and the second distance with a target normal distance threshold, and determine whether it is able to control the first fork mechanism and the second fork mechanism to perform goods processing based on a first comparison processing result; and a deviation correction processing module configured to, in a state of determining that it is unable to control the first fork mechanism and the second fork mechanism to perform goods processing, respectively perform second comparison processing on the first distance and the second distance with a deviation correction distance threshold, and determine whether the shuttle vehicle is controlled to perform deviation correction processing based on a second comparison processing result.

In some embodiments, the goods processing module comprises: a goods picking determination unit configured to, if the first distance is greater than the target normal distance threshold and the second distance is greater than the target normal distance threshold, determine that it is able to control the first fork mechanism and the second fork mechanism to perform goods processing.

In some embodiments, the goods processing module comprises: a double-pass processing unit configured to control the first fork mechanism and the second fork mechanism to be respectively extended out by a first forking length, wherein the first forking length is equal to the target normal distance threshold.

In some embodiments, the deviation correction processing module comprises: a deviation correction determination unit configured to, if the first distance is less than the deviation correction distance threshold or the second distance is less than the deviation correction distance threshold, determine that the shuttle vehicle cannot be controlled to perform deviation correction processing.

In some embodiments, the deviation correction processing module comprises: an abnormality reporting unit configured to, in the state of determining that the shuttle vehicle cannot be controlled to perform deviation correction processing, report abnormality information of placement of the carrying target.

In some embodiments, the deviation correction processing module comprises: a mechanism control unit configured to control the first fork mechanism and the second fork mechanism to be respectively extended out by a second forking length based on the first distance and the second distance, and control the shuttle vehicle to move forwards and backwards.

In some embodiments, the mechanism control unit is configured to select a shorter distance from the first distance and the second distance; and taking a difference between the shorter distance and a measurement error threshold as the second forking length.

In some embodiments, the mechanism control unit is configured to control the shuttle vehicle to move forwards and backwards at least once based on a forward movement distance setting value and a backward movement distance setting value, until the first distance is greater than the target normal distance threshold and the second distance is greater than the target normal distance threshold.

In some embodiments, the carrying target comprises: a cargo box; and the first distance measurement device and the second distance measurement device comprise: a laser distance measurement device.

According to a third aspect of the present disclosure, there is provided a shuttle vehicle control apparatus, comprising: a memory; and a processor coupled to the memory, the processor being configured to, based on instructions stored in the memory, perform the method as described above.

According to a fourth aspect of the present disclosure, there is provided a shuttle vehicle, comprising: the shuttle vehicle control apparatus as described above.

According to a fifth aspect of the present disclosure, there is provided a computer-readable storage medium, having thereon stored computer instructions which, when executed by a processor, perform the method as described above.

According to a sixth aspect of the present disclosure, there is provided a goods deviation correction control method for a shuttle vehicle, comprising: controlling the shuttle vehicle to reach a specified position, and controlling a first fork mechanism and a second fork mechanism to be respectively extended out by a second forking length; and controlling the shuttle vehicle to move forwards and backwards, so as to perform deviation correction processing on goods.

In some embodiments, the controlling a first fork mechanism and a second fork mechanism to be respectively extended out by a second forking length comprises: controlling a first distance measurement device and a second distance measurement device to respectively measure a first distance and a second distance from a carrying target, wherein the first distance measurement device and the second distance measurement device are respectively mounted on the first fork mechanism and the second fork mechanism which are arranged in parallel on the shuttle vehicle; respectively performing first comparison processing on the first distance and the second distance with a target normal distance threshold, and determining whether it is able to control the first fork mechanism and the second fork mechanism to perform goods processing based on a first comparison processing result; and in a state of determining that it is unable to control the first fork mechanism and the second fork mechanism to perform goods processing, respectively performing second comparison processing on the first distance and the second distance with a deviation correction distance threshold, and determining whether to control the first fork mechanism and the second fork mechanism to be respectively extended out by a second forking length based on a second comparison processing result.

In some embodiments, if the first distance is greater than the target normal distance threshold and the second distance is greater than the target normal distance threshold, it is determined that it is able to control the first fork mechanism and the second fork mechanism to be respectively extended out by the second forking length.

In some embodiments, a shorter distance is selected from the first distance and the second distance; and a difference between the shorter distance and a measurement error threshold is taken as the second forking length.

In some embodiments, the controlling the shuttle vehicle to move forwards and backwards comprises: controlling the shuttle vehicle to move forwards and backwards at least once based on a forward movement distance setting value and a backward movement distance setting value, until the first distance is greater than the target normal distance threshold and the second distance is greater than the target normal distance threshold.

According to a seventh aspect of the present disclosure, there is provided a goods deviation correction control apparatus for a shuttle vehicle, comprising: a memory; and a processor coupled to the memory, the processor being configured to, based on instructions stored in the memory, perform the method as described above.

### BRIEF DESCRIPTION OF THE DRAWINGS

In order to more clearly illustrate the embodiments of the present disclosure or technical solutions in related arts, the drawings that need to be used in the description of the embodiments or related arts will be briefly described below; it is obvious that the drawings in the description below are only some embodiments of the present disclosure, and for one of ordinary skill in the art, other drawings may be obtained according to the drawings without paying creative labor.
Fig. 1 is a schematic flow diagram of some embodiments of a shuttle vehicle control method according to the present disclosure;
Fig. 2 is a schematic diagram of a shuttle vehicle picking goods;
Figs. 3A and 3B are schematic diagrams of fork mechanisms of a shuttle vehicle;
Figs. 4A and 4B are schematic diagrams of a shuttle vehicle performing deviation correction processing;
Fig. 5 is a schematic flow diagram of controlling a shuttle vehicle to perform deviation correction in some embodiments of a shuttle vehicle control method according to the present disclosure;
Fig. 6 is a schematic module diagram of some embodiments of a shuttle vehicle control apparatus according to the present disclosure;
Fig. 7 is a schematic module diagram of a goods processing module in some embodiments of a shuttle vehicle control apparatus according to the present disclosure;
Fig. 8 is a schematic module diagram of a deviation correction processing module in some embodiments of a shuttle vehicle control apparatus according to the present disclosure;
Fig. 9 is a schematic module diagram of other embodiments of a shuttle vehicle control apparatus according to the present disclosure.

### DETAILED DESCRIPTION

The more comprehensive description of the present disclosure will be made below with reference to the accompanying drawings, in which exemplary embodiments of the present disclosure are illustrated. The technical solutions in the embodiments of the present disclosure will be clearly and completely described below in conjunction with the drawings in the embodiments of the present disclosure, and it is obvious that the embodiments described are only some embodiments of the present disclosure, rather than all embodiments. All other embodiments, which can be obtained by one of ordinary skill in the art based on the embodiments in the present disclosure without making any creative labor, shall fall within the scope of protection of the present disclosure. The technical solutions of the present disclosure are variously described below in conjunction with the various drawings and embodiments.

"First", "second", and the like, hereinafter, are used only for descriptive distinction and have no other special meanings.

In the related art known to the inventors, in actual applications, due to mechanical vibration or other factors, a box on a shelf will generate position movement and angle deviation on the shelf; if a shuttle vehicle still picks the bin according to a position recorded in a system, then the shuttle vehicle might crash the bin in the process of picking the bin, resulting in an abnormality of failing in picking the bin and needing manual processing.

In view of this, a technical problem that the present disclosure aims to solve is to provide a shuttle vehicle control method and apparatus, a shuttle vehicle, and a storage medium, in which a tilt of a carrying target can be detected and position correction processing can be performed on the carrying target, which enables the shuttle vehicle to stably pick a bin, so that a probability of failing in transporting the carrying target is reduced, safety and reliability of logistics are enhanced, and customer's use experience is improved.

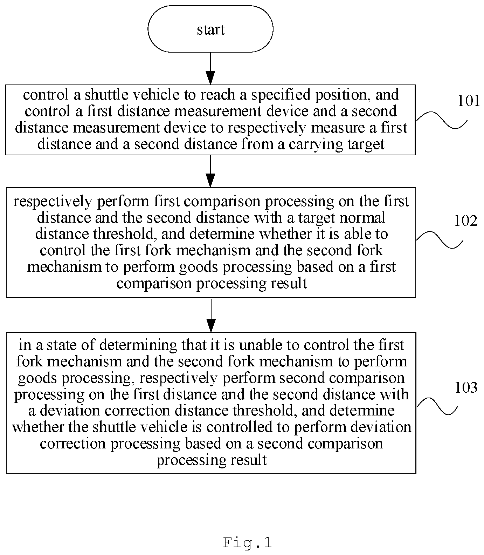

Fig. 1 is a schematic flow diagram of some embodiments of a shuttle vehicle control method according to the present disclosure, as shown in Fig. 1:
step 101, controlling a shuttle vehicle to reach a specified position, and controlling a first distance measurement device and a second distance measurement device to respectively measure a first distance and a second distance from a carrying target.

In some embodiments, the specified position may be a position of a storage location corresponding to the carrying target. The carrying target includes a cargo box, a bin, etc., and the first distance measurement device and the second distance measurement device may be laser distance measurement device, etc. The first distance measurement device and the second distance measurement device are respectively mounted on a first fork mechanism (wherein the fork mechanism is various and can be a single-pass or double-pass mechanism) and a second fork mechanism which are arranged in parallel on the shuttle vehicle.

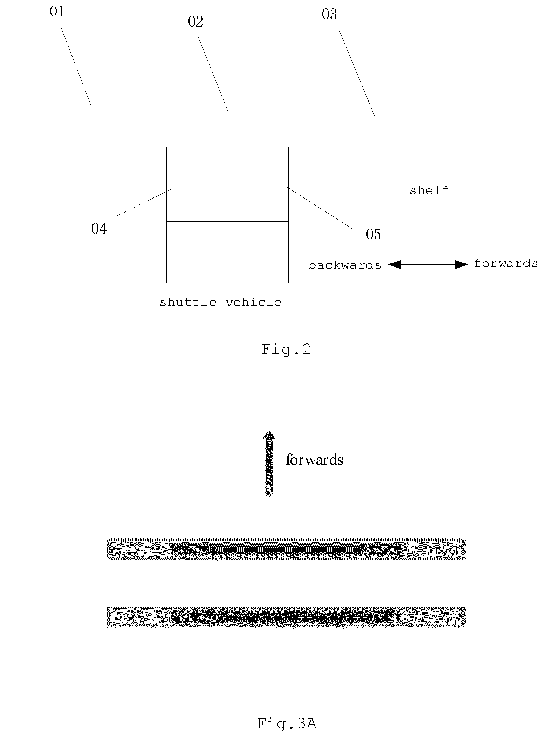

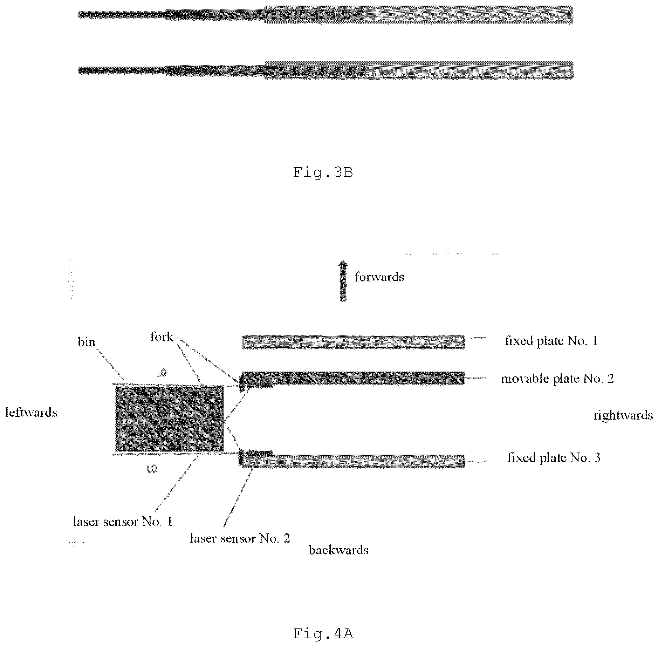

As shown in Fig. 2, the shuttle vehicle is controlled to place bins 01,02,03 on storage locations of a shelf, and positions of the storage locations are recorded. When the bins 01,02 or 03 need to be removed from the storage locations, the shuttle vehicle is controlled to move to the corresponding storage location (specified position), and by extending a first fork mechanism 04 and a second fork mechanism 05 to clamp the bin, the bin is removed from the storage location of the shelf. A shortest state of the fork mechanism is shown in Fig. 3A, and an extension state of the fork mechanism is shown in Fig. 3B.

Step 102, respectively performing first comparison processing on the first distance and the second distance with a target normal distance threshold, and determining whether it is able to control the first fork mechanism and the second fork mechanism to perform goods processing based on a first comparison processing result. The goods processing may be various, such as goods picking processing, goods transferring processing, goods inspection processing, and the like.

Step 103, in a state of determining that it is unable to control the first fork mechanism and the second fork mechanism to perform goods processing, respectively performing second comparison processing on the first distance and the second distance with a deviation correction distance threshold, and determining whether the shuttle vehicle is controlled to perform deviation correction processing based on a second comparison processing result.

In some embodiments, if the first distance is greater than the target normal distance threshold and the second distance is greater than the target normal distance threshold, it is determined that it is able to control the first fork mechanism and the second fork mechanism to perform goods processing. The first fork mechanism and the second fork mechanism are controlled to be respectively extended out by a first forking length, wherein the first forking length is equal to the target normal distance threshold. If the fork mechanism is a double-pass fork mechanism, the forking length is a double-pass forking length.

If the first distance is less than the target normal distance threshold or the second distance is less than the target normal distance threshold, it is determined that it is unable to control the first fork mechanism and the second fork mechanism to perform goods processing. If the first distance is less than the deviation correction distance threshold or the second distance is less than the deviation correction distance threshold, it is determined that the shuttle vehicle cannot be controlled to perform deviation correction processing. In the state of determining that the shuttle vehicle cannot be controlled to perform deviation correction processing, abnormality information of placement of the carrying target is reported.

According to the shuttle vehicle control method of the present disclosure, a tilt of the carrying target can be detected, and correction processing can be performed on the carrying target, which enables the shuttle vehicle to stably pick the bin, so that a probability of failing in transporting the carrying target is reduced.

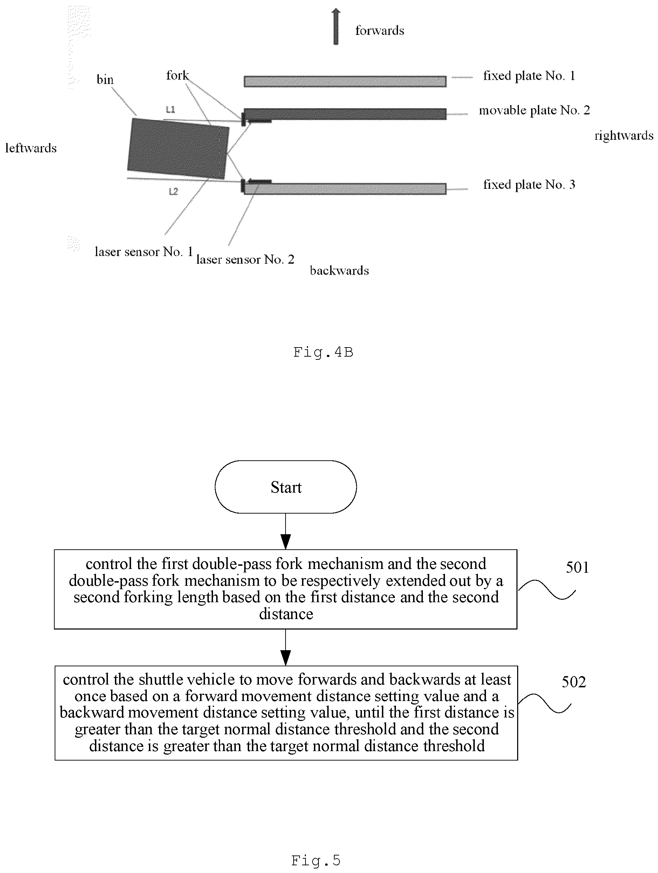

As shown in Figs. 4A and 4B, a movable plate No. 2 and a fixed plate No. 3 are fork mechanisms. If the movable plate No. 2 cannot move forwards and backwards, the shuttle vehicle is a fixed-distance one; and if the movable plate No. 2 can move forwards and backwards, the shuttle vehicle is a variable-distance one. The movable plate No. 2 and the fixed plate No. 3 can be in a linkage mode or in a separate control mode; the linkage mode refers to controlling the plates No. 2 and No. 3 to be extended out simultaneously, the separate control mode refers to respectively controlling the plates No. 2 and No. 3 to be extended out, and distances by which the plates No. 2 and No. 3 are extended out can be different.

The shuttle vehicle generally uses a linkage mechanism, which can save one servo system. Forks can be lifted up and down. When the cargo box is picked normally, control is performed according to the current control mode: lifting up the forks first to extend out the fork mechanisms, then lifting down the forks to retract the fork mechanisms, wherein in the process of retracting the fork mechanisms, the forks hook the cargo box and brings the cargo box back onto the shuttle vehicle.

The first distance measurement device and the second distance measurement device are respectively a laser sensor No. 1 and a laser sensor No. 2; by using the laser ranging sensor, a distance of an object to the sensor in a laser direction can be detected; light beams of the laser sensor No. 1 and the laser sensor No. 2 are respectively parallel to the movable plate No. 2 and the fixed plate No. 3, and are as close as possible to inner sides of the movable plate No. 2 and the fixed plate No. 3 (the inner side refers to one side close to the bin).

L0 refers to a distance of the laser sensor to a left edge of the bin, L0 is the target normal distance threshold, and a distance length of L0 can be set in advance according to experiments. Determining whether the fork mechanisms can be directly extended out for picking the case is as follows: if a distance LA (first distance) measured by the laser sensor No. 1 > L0 and a distance LB (second distance) measured by the laser sensor No. 2 > L0, it can be determined that the movable plate No. 2 and the fixed plate No. 3 are directly extended out so as to pick the bin.

Determining whether deviation correction can be performed is as follows: if LA < LC or LB < LC, the deviation correction processing cannot be performed; LC is an empirical value and is the deviation correction distance threshold, and a length of LC can be set in advance according to experiments. When the bin is tilted to a certain degree, it is considered that a deviation correction operation cannot be performed, so that the shuttle vehicle reports, over a network, the abnormality, which is processed manually. If the deviation correction can be performed, the shuttle vehicle is controlled to enter a deviation correction process.

Fig. 5 is a schematic flow diagram of controlling a shuttle vehicle to perform deviation correction in some embodiments of a shuttle vehicle control method according to the present disclosure, as shown in Fig. 5:
step 501, controlling the first fork mechanism and the second fork mechanism to be respectively extended out by a second forking length based on the first distance and the second distance.

For example, a shorter distance is selected from the first distance and the second distance, and a difference between the shorter distance and a measurement error threshold is taken as the second forking length. After the first fork mechanism and the second fork mechanism are controlled to be respectively extended out by the second forking length, the shuttle vehicle is controlled to move forwards and backwards.

Step 502, controlling the shuttle vehicle to move forwards and backwards at least once based on a forward movement distance setting value and a backward movement distance setting value, until the first distance is greater than the target normal distance threshold and the second distance is greater than the target normal distance threshold.

In some embodiments, calculating the second forking length (distance) by which the first fork mechanism and the second fork mechanism are respectively extended out is as follows: if LA>LB, the second forking length extended out is LD=LB-LE, where LE is the measurement error threshold, namely a measurement error of a laser emission point in the laser direction, and a distance length of LE can be set in advance according to experiments. A distance value of LD makes the fork mechanism extended out as much as possible without colliding with the bin; LD=LA-LE if LA<LB.

The shuttle vehicle is controlled to move forwards slowly by a distance S1 (the forward distance setting value), where S1 may be an empirical value obtained according to experiments, or calculated through a preset function relationship, and S1 may be a maximum value that the shuttle vehicle can move. The shuttle vehicle moves reversely, and the backward movement distance setting value is S2, where S2 may be an empirical value obtained through experiments, and S2 may be a minimum distance for avoiding the light beam of the laser sensor. Because in the process of the shuttle vehicle moving by S1, there is one fork mechanism against the bin, after moving reversely by S2, the bin avoids occlusion; if the first distance is greater than the target normal distance threshold and the second distance is greater than the target normal distance threshold, it is determined that the deviation correction operation is completed.

The deviation correction operation for the bin might not be completed once. For example, in a first deviation correction operation, the shuttle vehicle is controlled to move forwards first; and in a second deviation correction operation, the shuttle vehicle is controlled to move backwards first. If a coordinate of the shuttle vehicle is X0 when parking, a distance by which it can move for deviation correction is S3 according to actual scene needs. In the first deviation correction, S1=S3, its coordinate after moving is X1=X0+S1, and its coordinate after moving reversely is: X2=X0+S1-S2; in the second deviation correction, its coordinate after moving for the first time is: X3=X0-S3, its coordinate after moving reversely is: x4=X3+S2. And so on, in an Nth deviation correction (where N=1, 3, 5, 7 ....), its coordinate after moving for the first time is: Xn=X0+S3, its coordinate after moving reversely is: Xn+1=X0+S3-S2; in an Mth deviation correction (where N=2, 4, 6, 8 .... ), its coordinate after moving for the first time is: Xm=X0-S3, its coordinate after moving reversely is: Xm+1=X0-S3+S2. If the fork mechanisms are not in the linkage mode, if LA>L0, the distance LA by which the fork mechanism is extended out is L0, and if LB>L0, the distance LB by which the fork mechanism is extended out is L0.

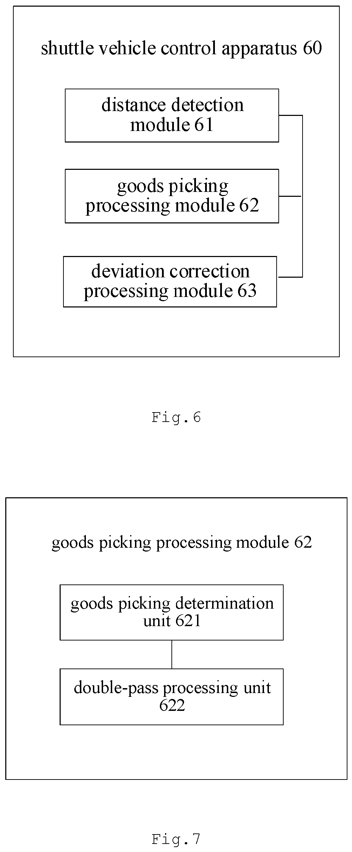

In some embodiments, as shown in Fig. 6, the present disclosure provides a shuttle vehicle control apparatus 60, comprising a distance detection module 61, a goods processing module 62, and a deviation correction processing module 63. The distance detection module 61 controls a shuttle vehicle to reach a specified position, and controls a first distance measurement device and a second distance measurement device to respectively measure a first distance and a second distance from a carrying target, wherein the first distance measurement device and the second distance measurement device are respectively mounted on a first fork mechanism and a second forking which are arranged in parallel on the shuttle vehicle.

The goods processing module 62 performs first comparison processing on the first distance and the second distance with a target normal distance threshold, and determines whether it is able to control the first fork mechanism and the second fork mechanism to perform goods processing based on a first comparison processing result. In a state of determining that it is unable to control the first fork mechanism and the second fork mechanism to perform goods processing, the deviation correction processing module 63 respectively performs second comparison processing on the first distance and the second distance with a deviation correction distance threshold, and determines whether the shuttle vehicle is controlled to perform deviation correction processing based on a second comparison processing result.

In some embodiments, the present disclosure provides a goods deviation correction control method for a shuttle vehicle. The shuttle vehicle is controlled to reach a specified position, and a first fork mechanism and a second fork mechanism are controlled to be respectively extended out by a second forking length, and the shuttle vehicle is controlled to move forwards and backwards, so as to perform deviation correction processing on goods.

The shuttle vehicle may be controlled to move forwards and backwards in various manners, for example, the shuttle vehicle is controlled to move forwards and backwards at least once based on a forward movement distance setting value and a backward movement distance setting value, until a first distance is greater than a target normal distance threshold and a second distance is greater than the target normal distance threshold.

A first distance measurement device and a second distance measurement device are controlled to respectively measure the first distance and the second distance from a carrying target, and the first distance measurement device and the second distance measurement device are respectively mounted on the first fork mechanism and the second fork mechanism which are arranged in parallel on the shuttle vehicle; first comparison processing is respectively performed on the first distance and the second distance with a target normal distance threshold, and it is determined whether it is able to control the first fork mechanism and the second fork mechanism to perform goods processing based on a first comparison processing result.

In a state of determining that it is unable to control the first fork mechanism and the second fork mechanism to perform goods processing, second comparison processing is respectively performed on the first distance and the second distance with a deviation correction distance threshold, and it is determined whether to control the first fork mechanism and the second fork mechanism to be respectively extended out by a second forking length based on a second comparison processing result.

If the first distance is greater than the target normal distance threshold and the second distance is greater than the target normal distance threshold, it is determined that it is able to control the first fork mechanism and the second fork mechanism to be respectively extended out by the second forking length. A shorter distance is selected from the first distance and the second distance; and a difference between the shorter distance and a measurement error threshold is taken as the second forking length.

In some embodiments, as shown in Fig. 7, the goods processing module 62 comprises a goods picking determination unit 621 and a double-pass processing unit 622. If the first distance is greater than the target normal distance threshold and the second distance is greater than the target normal distance threshold, the goods picking determination unit 621 determines that it is able to control the first fork mechanism and the second fork mechanism to perform goods processing. The double-pass processing unit 622 controls the first fork mechanism and the second fork mechanism to be respectively extended out by a first forking length, wherein the first forking length is equal to the target normal distance threshold.

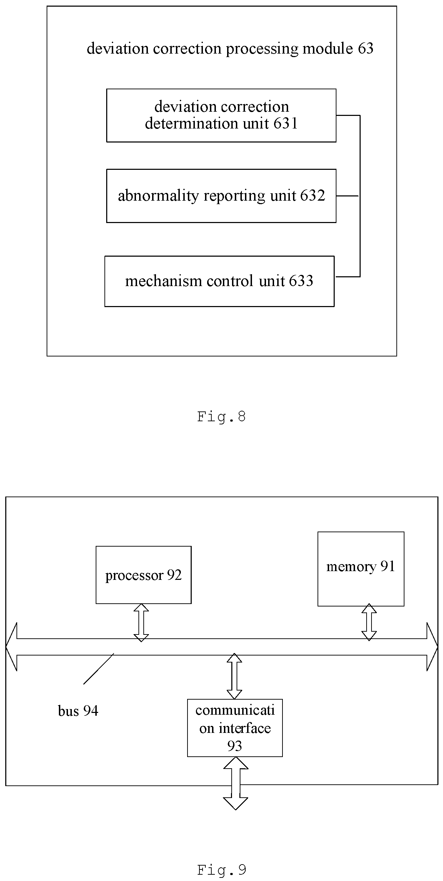

In some embodiments, as shown in Fig. 8, the deviation correction processing module 63 comprises: a deviation correction determination unit 631, an abnormality reporting unit 632, and a mechanism control unit 633. If the first distance is less than the deviation correction distance threshold or the second distance is less than the deviation correction distance threshold, the deviation correction determination unit 631 determines that the shuttle vehicle cannot be controlled to perform deviation correction processing. The abnormality reporting unit 632 reports, in the state of determining that the shuttle vehicle cannot be controlled to perform deviation correction processing, abnormality information of placement of the carrying target. The mechanism control unit 633 controls the first fork mechanism and the second fork mechanism to be respectively extended out by a second forking length based on the first distance and the second distance, and the shuttle vehicle is controlled to move forwards and backwards.

For example, the mechanism control unit 633 selects a shorter distance from the first distance and the second distance, and takes a difference between the shorter distance and a measurement error threshold as the second forking length. The mechanism control unit 633 controls, based on a forward movement distance setting value and a backward movement distance setting value, the shuttle vehicle to move forwards and backwards at least once, until the first distance is greater than the target normal distance threshold and the second distance is greater than the target normal distance threshold.

Fig. 9 is a schematic module diagram of other embodiments of a shuttle vehicle control apparatus according to the present disclosure. As shown in Fig. 9, the apparatus may comprise a memory 91, a processor 92, a communication interface 93, and a bus 94. The memory 91 is used for storing instructions, the processor 92 is coupled to the memory 91, and the processor 92 is configured to, based on the instructions stored in the memory 91, perform the above shuttle vehicle control method.

The memory 91 may be a high-speed RAM memory, a non-volatile memory, or the like, and the memory 91 may also be a memory array. The memory 91 might also be partitioned into blocks, and the blocks may be combined into virtual volumes according to certain rules. The processor 92 may be a central processing unit (CPU), or an application specific integrated circuit (ASIC), or one or more integrated circuits configured to implement the shuttle vehicle control method of the present disclosure.

In some embodiments, the present disclosure provides a shuttle vehicle, comprising the shuttle vehicle control apparatus in any of the above embodiments.

In some embodiments, the present disclosure provides a goods deviation correction control apparatus for a shuttle vehicle, comprising: a memory, a processor, a communication interface, and a bus. The memory is used for storing instructions, and the processor is coupled to the memory and is configured to, based on the instructions stored in the memory, perform the above goods deviation correction control method for a shuttle vehicle.

The memory may be a high-speed RAM memory, a non-volatile memory, or the like, and the memory may also be a memory array. The memory might also be partitioned into blocks, and the blocks may be combined into virtual volumes according to certain rules. The processor may be a central processing unit (CPU), or an application specific integrated circuit (ASIC) , or one or more integrated circuits configured to implement the goods deviation correction control method for a shuttle vehicle of the present disclosure.

In some embodiments, the present disclosure provides a computer-readable storage medium, having thereon stored computer instructions which, when executed by a processor, implement the shuttle vehicle control method in any of the above embodiments.

The computer-readable storage medium may take any combination of one or more readable media. The readable medium may be a readable signal medium or a readable storage medium. The readable storage medium may include, for example, but is not limited to, an electronic, magnetic, optical, electromagnetic, infrared, or semiconductor system, apparatus, or device, or a combination of any of the foregoing. More specific examples (a non-exhaustive list) of the readable storage medium may include : an electrical connection having one or more wires, a portable diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to the shuttle vehicle control method and apparatus, the shuttle vehicle, and the storage medium in the above embodiments, the tilt of the carrying target can be detected and position correction processing can be performed on the carrying target, which enables the shuttle vehicle to stably pick the case, so that the probability of failing in transporting the carrying target is reduced, the safety and reliability of logistics are enhanced, and the customer's use experience is improved.

The basic principles of the present disclosure have been described above in conjunction with specific embodiments, but it should be noted that advantages, benefits, effects, and the like, mentioned in the present disclosure are only examples and not limitations, and cannot be considered essential to the various embodiments of the present disclosure. It should be appreciated by those skilled in the art that the embodiments of the present disclosure may be provided as a method, system, or computer program product. Accordingly, the present disclosure may take a form of an entire hardware embodiment, an entire software embodiment, or an embodiment combining software and hardware aspects. Furthermore, the present disclosure may take a form of a computer program product implemented on one or more computer-usable non-transitory storage media (including, but not limited to, a disk memory, CD-ROM, optical memory, etc.) having computer-usable program code embodied therein.

The present disclosure is described with reference to flow diagrams and/or block diagrams of the method, device (system) and computer program product according to the embodiments of the present disclosure. It should be understood that each flow and/or block of the flow diagrams and/or block diagrams, and a combination of flows and/or blocks in the flow diagrams and/or block diagrams, can be implemented by computer program instructions. These computer program instructions may be provided to a processor of a general-purpose computer, special-purpose computer, embedded processor, or other programmable data processing devices to produce a machine, such that the instructions which are executed through the processor of the computer or other programmable data processing devices create means for implementing the functions specified in one or more flows of the flow diagrams and/or one or more blocks of the block diagrams.

These computer program instructions may also be stored in a computer-readable memory that can guide a computer or other programmable data processing devices to work in a specific manner, such that the instructions stored in the computer-readable memory produce an article of manufacture including instruction means which implement the functions specified in one or more flows of the flow diagrams and/or one or more blocks of the block diagrams.

The method and system of the present disclosure might be implemented in a number of ways. The method and system of the present disclosure may be implemented, for example, by software, hardware, firmware, or any combination of software, hardware, and firmware. The above order for the steps of the method is for illustration only, and the steps of the method of the present disclosure are not limited to the order specifically described above unless specifically stated otherwise. Furthermore, in some embodiments, the present disclosure may further be implemented as programs recorded in a recording medium, the programs including machine-readable instructions for implementing the method according to the present disclosure. Therefore, the present disclosure further covers a recording medium storing a program for performing the method according to the present disclosure.

The description of the present disclosure has been presented for purposes of examples and description, and is not intended to be exhaustive or limit this disclosure to the form disclosed. Many modifications and variations are apparent to one of ordinary skill in the art. The selection and description of the embodiments are to better explain the principles and the practical applications of the present disclosure, and to enable one of ordinary skill in the art to understand the present disclosure and therefore design various embodiments with various modifications suitable for a specific purpose.

## Claims

1. A shuttle vehicle control method, comprising:
controlling a shuttle vehicle to reach a specified position, and controlling a first distance measurement device and a second distance measurement device to respectively measure a first distance and a second distance from a carrying target,
wherein the first distance measurement device and the second distance measurement device are respectively mounted on a first fork mechanism and a second fork mechanism which are arranged in parallel on the shuttle vehicle;
respectively performing first comparison processing on the first distance and the second distance with a target normal distance threshold, and determining whether it is able to control the first fork mechanism and the second fork mechanism to perform goods processing based on a first comparison processing result; and
respectively performing second comparison processing on the first distance and the second distance with a deviation correction distance threshold, and determining whether the shuttle vehicle is controlled to perform deviation correction processing based on a second comparison processing result, in a state of determining that it is unable to control the first fork mechanism and the second fork mechanism to perform goods processing.

2. The shuttle vehicle control method according to claim 1, wherein the determining whether it is able to control the first fork mechanism and the second fork mechanism to perform goods processing based on a first comparison processing result comprises:
determining that it is able to control the first fork mechanism and the second fork mechanism to perform goods processing in a case where the first distance is greater than the target normal distance threshold and the second distance is greater than the target normal distance threshold.

3. The shuttle vehicle control method according to claim 2, wherein the controlling the first fork mechanism and the second fork mechanism to perform goods processing comprises:
controlling the first fork mechanism and the second fork mechanism to be respectively extended out by a first forking length, wherein the first forking length is equal to the target normal distance threshold.

4. The shuttle vehicle control method according to claim 1, wherein the determining whether the shuttle vehicle is controlled to perform deviation correction processing based on a second comparison processing result comprises:
determining that the shuttle vehicle cannot be controlled to perform deviation correction processing in a case where the first distance is less than the deviation correction distance threshold or the second distance is less than the deviation correction distance threshold.

5. The shuttle vehicle control method according to claim 4, further comprising:
reporting abnormality information of placement of the carrying target in the state of determining that the shuttle vehicle cannot be controlled to perform deviation correction processing.

6. The shuttle vehicle control method according to claim 2, wherein the controlling the shuttle vehicle to perform deviation correction processing comprises:
controlling the first fork mechanism and the second fork mechanism to be respectively extended out by a second forking length based on the first distance and the second distance, and controlling the shuttle vehicle to move forwards and backwards.

7. The shuttle vehicle control method according to claim 6, wherein the controlling the first fork mechanism and the second fork mechanism to be respectively extended out by a second forking length based on the first distance and the second distance comprises:
selecting a shorter distance from the first distance and the second distance; and
taking a difference between the shorter distance and a measurement error threshold as the second forking length.

8. The shuttle vehicle control method according to claim 6, wherein the controlling the shuttle vehicle to move forwards and backwards comprises:
controlling the shuttle vehicle to move forwards and backwards at least once based on a forward movement distance setting value and a backward movement distance setting value, until the first distance is greater than the target normal distance threshold and the second distance is greater than the target normal distance threshold.

9. The shuttle vehicle control method according to any of claims 1 to 8, wherein:
the carrying target comprises a cargo box; and the first distance measurement device and the second distance measurement device comprise a laser distance measurement device.

10. A shuttle vehicle control apparatus, comprising:
a distance detection module configured to control a shuttle vehicle to reach a specified position, and control a first distance measurement device and a second distance measurement device to respectively measure a first distance and a second distance from a carrying target, wherein the first distance measurement device and the second distance measurement device are respectively mounted on a first fork mechanism and a second fork mechanism which are arranged in parallel on the shuttle vehicle;
a goods processing module configured to respectively perform first comparison processing on the first distance and the second distance with a target normal distance threshold, and determine whether it is able to control the first fork mechanism and the second fork mechanism to perform goods processing based on a first comparison processing result; and
a deviation correction processing module configured to respectively perform second comparison processing on the first distance and the second distance with a deviation correction distance threshold, and determine whether the shuttle vehicle is controlled to perform deviation correction processing based on a second comparison processing result, in a state of determining that it is unable to control the first fork mechanism and the second fork mechanism to perform goods processing.

11. The shuttle vehicle control apparatus according to claim 10, wherein
the goods processing module comprises:
a goods picking determination unit configured to, determine that it is able to control the first fork mechanism and the second fork mechanism to perform goods processing in a case where the first distance is greater than the target normal distance threshold and the second distance is greater than the target normal distance threshold.

12. The shuttle vehicle control apparatus according to claim 11, wherein
the goods processing module comprises:
a double-pass processing unit configured to control the first fork mechanism and the second fork mechanism to be respectively extended out by a first forking length, wherein the first forking length is equal to the target normal distance threshold.

13. The shuttle vehicle control apparatus according to claim 10, wherein
the deviation correction processing module comprises:
a deviation correction determination unit configured to, determine that the shuttle vehicle cannot be controlled to perform deviation correction processing in a case where the first distance is less than the deviation correction distance threshold or the second distance is less than the deviation correction distance threshold.

14. The shuttle vehicle control apparatus according to claim 13, wherein
the deviation correction processing module comprises:
an abnormality reporting unit configured to, in the state of determining that the shuttle vehicle cannot be controlled to perform deviation correction processing, report abnormality information of placement of the carrying target.

15. The shuttle vehicle control apparatus according to claim 11, wherein
the deviation correction processing module comprises:
a mechanism control unit configured to control the first fork mechanism and the second fork mechanism to be respectively extended out by a second forking length based on the first distance and the second distance, and control the shuttle vehicle to move forwards and backwards.

16. The shuttle vehicle control apparatus according to claim 15, wherein
the mechanism control unit is configured to select a shorter distance from the first distance and the second distance; and take a difference between the shorter distance and a measurement error threshold as the second forking length.

17. The shuttle vehicle control apparatus according to claim 15, wherein
the mechanism control unit is configured to control the shuttle vehicle to move forwards and backwards at least once based on a forward movement distance setting value and a backward movement distance setting value, until the first distance is greater than the target normal distance threshold and the second distance is greater than the target normal distance threshold.

18. The shuttle vehicle control apparatus according to any of claims 10 to 17, wherein:
the carrying target comprises a cargo box; and the first distance measurement device and the second distance measurement device comprise a laser distance measurement device.

19. A shuttle vehicle control apparatus, comprising:
a memory; and a processor coupled to the memory, the processor being configured to, based on instructions stored in the memory, perform the method according to any of claims 1 to 9.

20. A shuttle vehicle, comprising:
the shuttle vehicle control apparatus according to any of claims 10 to 19.

21. A computer-readable storage medium, having thereon stored computer instructions which, when executed by a processor, perform the method according to any of claims 1 to 9.
